# EUROPÄISCHE PATENTSCHRIFT

(11) **EP 0 481 297 B1**
(45) Veröffentlichungstag und Bekanntmachung des Hinweises auf die Patenterteilung: **26.07.1995**
(21) Anmeldenummer: 91116913.4
(22) Anmeldetag: 04.10.1991
(51) Int. Cl.: C08F 10/08, C08F 4/14

(54) **Verfahren zur Herstellung von Polyisobuten**
Process for preparing polyisobutylene
Procédé de préparation de polyisobutylène

(30) Priorität: 19.10.1990 DE 4033195
(43) Veröffentlichungstag der Anmeldung: 22.04.1992
(73) Patentinhaber: BASF Aktiengesellschaft, 67063 Ludwigshafen (DE)
(72) Erfinder: Rath, Hans Peter, Dr., W-6718 Gruenstadt (DE); Hoffmann, Herwig, Dr., W-6710 Frankenthal (DE); Reuter, Peter, Dr., W-6800 Mannheim 1 (DE); Mach, Helmut, Dr., W-6900 Heidelberg (DE)

(56) Entgegenhaltungen:
- EP-A- 0 145 235
- US-A- 2 344 213

## Beschreibung

Die vorliegende Erfindung betrifft ein neues und verbessertes Verfahren zur Herstellung von Polyisobuten aus Isobuten und/oder isobutenhaltigen Flüssiggasen in Gegenwart eines Komplexes aus BF₃ und einem langkettigen Alkohol.

Die Polymerisation von Isobuten mit Hilfe verschiedener Initiatoren, darunter Bortrifluorid, ist allgemein bekannt, z.B. aus "High Polymers", Band XXIV (J. Wiley & Sons, Inc., New York, 1971), Seite 713 ff. Je nach den ebenfalls an sich bekannten Polymerisationstechniken erhält man hierbei Produkte unterschiedlichen mittleren Polymerisationsgrades P, wobei solche Polymeren mit P = 10 bis 100 besondere Bedeutung als Zwischenprodukte für Mineralölhilfsmittel haben. Diese Polyisobutene (man müßte sie zutreffender als Oligoisobutene bezeichnen, jedoch ist dieser Begriff im Schrifttum weniger gebräuchlich) werden in sogenannten polymeranalogen Reaktionen in einer ersten Stufe chloriert, maleiniert oder hydroformyliert. In weiteren Umsetzungsschritten wird das chlorierte Polymer dehydrohalogeniert und mit Polyaminen oder Maleinsäureanhydrid umgesetzt, das Oxoprodukt mit Aminen oder NH₃ reduktiv aminiert und die Maleinierungsprodukte des thermischen oder chlorhaltigen Verfahrens mit Polyaminen umgesetzt. Die daraus resultierenden Polybutenamine finden überwiegend als Benzinadditive, die Polyisobutenylbernsteinsäureimide im Bereich der Schmieröladditive Verwendung.

Aus der DE-A-27 02 604 ist ein Verfahren zur Herstellung von Polyisobuten aus Isobuten unter gasförmigem BF₃ als Polymerisationskatalysator bekannt, das zu einem Polyisobuten führt, das 60 bis 90 % endständige und somit reaktive Doppelbindungen enthält.

Ferner ist aus EP-A-145 235 bekannt, für die Polyisobutenherstellung einen BF₃/C₁- bis C₈-Alkanol-Komplex einzusetzen, wobei ebenfalls 70 bis 90 % endständige Doppelbindungen im Polyisobuten erhalten werden sollen.

Die beiden zuvor genannten Verfahren betreffen die heterogene Katalyse. In dem einen Fall muß BF₃ gasförmig eingebracht werden und Düsengeometrie und Druckverhältnisse spielen eine wesentliche Rolle. Unbefriedigend ist insbesondere die Veränderung der Düsengeometrie durch Korrosion oder die Verstopfung der BF₃ Düsen. Bei Einsatz eines BF₃-Komplexes gemäß EP-A-145 235 kommt es auf eine gute Verteilung der unlöslichen Komplexe an, die hohe Turbulenz oder gute Rührung notwendig macht. Die Verwendung von chlorierten Kohlenwasserstoffen als Lösevermittler und Dosierhilfsmittel ist hier unbefriedigend, da sie die Isomerisierung verstärkt.

Der vorliegenden Erfindung lag daher die Aufgabe zugrunde, den genannten Nachteilen abzuhelfen.

Demgemäß wurde ein neues und verbessertes Verfahren zur Herstellung von Polyisobuten aus Isobuten und/oder isobutenhaltigen Flüssiggasen bzw. Kohlenwasserstoffen in Gegenwart eines vorgefertigten Komplexes aus BF₃ und einem Alkohol gefunden, welches dadurch gekennzeichnet ist, daß man C₉- bis C₂₁-Alkanole als Komplexbildner einsetzt.

### Herstellung des BF₃/C₉- bis C₂₀-Alkanol-Komplexes

Der BF₃/C₉- bis C₂₁-Alkanol-Komplex läßt sich durch Einheiten, Eingasen oder Aufpressen von BF₃ in ein C₉- bis C₂₁-Alkanol oder deren Gemische bei Temperaturen von (-30) bis +20°C, vorzugsweise (-20) bis 0°C gegebenenfalls in einem inerten Lösemittel herstellen. Beim Aufpressen eignen sich Drücke von 1,2 bis 10 bar. Im allgemeinen werden 0,05 bis 5 molare, bevorzugt 0,05 bis 3 molare Komplexlösungen in einem inerten Kohlenwasserstoff verwendet. In einer bevorzugten Ausführungsform wird die Komplexlösung durch Einleiten von BF₃ bis zur Sättigung einer z.B. 2,0 molaren Lösung von iso-Tridekanol in Hexan hergestellt und das gelöste, nicht komplex gebundene BF₃-Gas mittels Durchleiten eines trockenen Inertgases wie Stickstoff oder Argon oder durch Anlegen eines Vakuums (ca. 100 mbar) entfernt. Danach wird z.B. mit Hexan auf 0,1 molar verdünnt und Komplexbildner wie Säuren, Phenole, Wasser oder Alkohole, insbesondere C₉ bis C₂₁ Alkohole in solchen Mengen zugesetzt, daß das Molverhältnis von BF₃ zu Komplexbildner insgesamt zwischen 0,5 und 0,99 bevorzugt zwischen 0,6 und 0,95 liegt. Der Wert ist abhängig von dem gewünschten Molekulargewicht, der Polymerisationstemperatur und dem Isobutenumsatz und damit letztendlich auch von der Verweilzeit und liegt zwischen 0,5 und 0,95. Ein Teilumsatz ist hinsichtlich Produktqualität stets vorteilhaft.

Bei dem erfindungsgemäßen Verfahren können Komplexbildner mit unterschiedlicher Zielsetzung in dem System Verwendung finden. Kennzeichnend ist die Verwendung eines vorgeformten BF₃-Komplexes, der eine homogene Katalyse zumindest bei Eintritt in den Reaktor ermöglicht. Außerdem wird zur Absenkung des Molverhältnisses von BF₃ zu Komplexbildner weiterer Komplexbildner benötigt. Hierbei können ein oder mehrere Komplexbildner Verwendung finden, wobei eine Absenkung des Molverhältnisses vor und/oder nach Eintritt in den Reaktor erfolgen kann. Führt man den BF₃-Komplex lange vor Reaktoreintritt mit weiterem Komplexbildner zusammen, wählt man aus Löslichkeitsgründen meist denselben Komplexbildner, um Abscheidungen zu vermeiden. Je stärker man sich dem Zeitpunkt des Reaktoreintrittes nähert, um so eher kann man Komplexbildner höherer Polarität einsetzen, deren Komplexe dann nicht mehr löslich sind und erst überwiegend im Reaktor monomolekular in situ erzeugt werden. Einen vergleichbaren Effekt erhält man, wenn man den zusätzlichen Komplexbildner mit einem getrennten Mengenstrom oder im Lösungsmittel im Isobuten oder isobutenhaltigen Kohlenwasserstoffen zuführt. Insbesondere die separate Zufuhr, gegebenenfalls in einem inerten Lösungsmittel, hat regelungstechnische Vorteile, weil der Reaktor schneller auf Änderungen reagiert und so Schwankungen im Komplexbildnergehalt der Zuläufe (meist Wasser und Methanol) besser kompensiert werden können.

Als Komplexbildner für die Herstellung des vorgeformten BF₃-Komplexes, die eine homogene Katalyse sicherstellen, sind unter den linearen, aliphatischen, primären Alkoholen vor allem n-Nonanol und n-Dekanol, n-Undekanol und n-Dodekanol geeignet, bevorzugt n-Nonanol und n-Dekanol. Bei Oxoalkoholen, die wegen ihren Verzweigungen auch bei tiefen Temperaturen flüssig bzw. gelöst bleiben, sind vor allem iso-Nonanol, iso-Dekanol, iso-Tridekanol und iso-Heptadekanol geeignet. Sie sind aus den entsprechenden Propen- oder Butenoligomeren durch Hydroformylierung gut zugänglich.

Als Komplexbildner, die zur Absenkung des molaren BF₃-Anteils eingesetzt werden, eignen sich außer C₉- bis C₂₁-Alkanolen auch unsubstituiertes oder substituiertes Phenol, wie ortho-, meta- und para-Kresol, Wasser oder C₁- bis C₈-Carbonsäure, wie Ameisensäure, Essigsäure, Propionsäure, Pivalinsäure und Ethylhexansäure.

Unter den Alkanolen eignen sich neben Methanol, Ethanol, n-Propanol, Butanol und anderen besonders C₉- bis C₂₁-Alkanole, bevorzugt C₉- bis C₁₇-Alkanole wie n-Nonanol, n-Dekanol, aber auch mehr oder minder verzweigte Oxoalkoholgemische wie iso-Nonanole, iso-Dekanole, iso-Tridekanole oder iso-Heptadekanole.

Diese langkettigen Alkohole werden auch zur Herstellung des vorgeformten BF₃-Komplexes verwendet und sind die Basis der homogenen Katalyse.

Als inerte Lösungsmittel eignen sich C₅- bis C₂₀-Alkane, bevorzugt C₅- bis C₁₂-Alkane wie n-Pentan, iso-Pentan, n-Hexan, n-Heptan, iso-Oktan und iso-Dodekan sowie C₅- bis C₈-Cycloalkane wie Cyclopentan, Cyclohexan, Cycloheptan und Cyclooctan.

Die Herstellung von Polyisobutenen aus Isobuten und/oder isobutenhaltigen Flüssiggasen in Gegenwart eines Komplexes aus BF₃/C₉-C₂₁-Alkanol kann durch Polymerisation in üblichen Reaktoren wie Rührkesseln, Rohr-, Rohrbündel- und Schlaufenreaktoren diskontinuierlich, halbkontinuierlich oder kontinuierlich durchgeführt werden. Kontinuierlich sind Schlaufenreaktoren [Rohr(bündel)-reaktoren mit Rührkesselcharakteristik] bevorzugt. Besonders günstig sind dabei Rohrquerschnitte, die in Teilbereichen zu Turbulenz führen. Auch Kunststoffbeschichtungen mit Polytetrafluorethylen, Polyethylen oder Polypropylen sind vorteilhaft, da sie Korrosionsprobleme verringern.

In solchen Einrichtungen können Isobuten, isobutenhaltige Lösungsmittel oder Flüssiggase mit einem Katalysator aus einem vorgefertigten Komplex aus BF₃, einem C₉- bis C₂₁-Alkohol und gegebenenfalls einem inerten Lösungsmittel gemischt und über eine Kühlung die entstehende Reaktionswärme abgeführt werden. Die Komplexkonzentration der Katalysatorlösung reicht bei dem erfindungsgemäßen Verfahren vom BF₃ gesättigten Alkohol bis zur 1 %igen Lösung in Hexan. Eine niedrige Viskosität der Komplexlösung ist bei der Herstellung ebenso vorteilhaft wie bei der Einmischung.

Die Polymerisation wird isotherm, meist bei gleichbleibender Monomerkonzentration durchgeführt. Dabei erhält man enge Molekulargewichtsverteilungen bis hinunter zu 1,2. Dabei wird die Einheitlichkeit der Molekulargewichtsverteilung als das Gewichtsmittelmolekulargewicht (M̅_{w}) zu Zahlenmittelmolekulargewicht (M̅ₙ) definiert. Man erhält das Zahlenmittelmolekulargewicht, indem das Gewicht einer Probe durch die Anzahl der Moleküle, aus der sie sich zusammensetzt, geteilt wird. Das Gewichtsmittelmolekulargewicht dagegen ist die Summe der Produkte gebildet aus Fraktionsgewichten und Molekulargewichten dividiert durch die Summe der Gewichte der Einzelfraktionen.

Die Temperaturen der Polymerisation liegen im allgemeinen unter 0°C, die Isobutenumsätze liegen je nach Verfahren, Verweilzeit und Katalysatormenge zwischen 20 und 100 %. Die Steuerung des Isobutenumsatzes ist für die Produktqualität des Polymeren von wesentlicher Bedeutung. Nach dem Anspringen der Reaktion erreicht man den Gleichgewichtszustand in wenigen Stunden.

Die Verweilzeit kann zwischen 10 Sekunden und mehreren Stunden betragen. Die Katalysatormenge kann zwischen 500 und 10 000 mg BF₃ pro kg Isobuten betragen. Isobuten, Flüssiggase und Lösungsmittel können mit Komplexbildnern, insbesondere Wasser und Alkohole versetzt oder von solchen befreit werden. Insbesondere eine destillative oder adsorptive Trocknung der Zuläufe ist bevorzugt. Je höher der Komplexbildnergehalt um so höher ist auch der Katalysatorbedarf.

Die Aufarbeitung erfolgt durch Abbruch mit Ammoniak oder 5 bis 50 gew.-%iger wäßriger Natronlauge, gefolgt von mehreren Wasserwäschen, und einer destillativen Aufarbeitung. Das Wertprodukt fällt als Sumpfprodukt einer Destillation bei 240°C und 2 mbar an. Die nach dem erfindungsgemäßen Verfahren hergestellten Polyisobutene haben in der Regel ein mittleres Molekulargewicht zwischen 500 und 6000 Dalton.

### Beispiele

### Beispiel 1

In einem Schlaufenreaktor mit einem Rohrdurchmesser von 10 mm wurden kontinuierlich 900 ml/h eines Gemisches (butadienfreier C₄-Schnitt) aus:

| | |
|---|---|
| iso-Butan | 4,0 % |
| n-Butan | 9,2 % |
| But-1-en | 29,0 % |
| trans-But-2-en | 7,7 % |
| cis-Buten-2 | 4,5 % |
| Isobuten | 45,4 % |
| Butadien | < 50 ppm |
| mit einem Wassergehalt von ca. 2 ppm | |

mit 40 ml/h einer frisch hergestellten, von überschüssigem BF₃ weitgehend befreiten 2 molaren BF₃/iso-Tridekanol-Katalysator-Lösung in Hexan bei -13°C umgesetzt. Eine Zahnradpumpe sorgte für ein Verhältnis von Umlauf zu Austrag von 100:1. Der Reaktionsaustrag wurde mit 10 gew.-%iger Natronlauge neutralisiert, wobei nicht umgesetztes Isobuten und andere Kohlenwasserstoffe (Flüssiggase) entwichen. Nach Aufnahme in Hexan und Waschen mit Wasser wurden die Leichtsieder bei maximal 230°C/1 mbar entfernt.

Die Ergebnisse sind in Tabelle 1 zusammengestellt.

### Beispiel 2

Analog Beispiel 1 wurden 500 ml/h Isobuten und 35 ml/h BF₃/iso-Tridekanol in 400 ml/h Hexan eingesetzt.

Die Ergebnisse sind in Tabelle 1 zusammengestellt.

### Beispiel 3

Analog Beispiel 1 wurden 500 ml/h Isobuten in Gegenwart von 400 ml Hexan mit einem BF₃-Komplex umgesetzt, der durch Sättigen einer 2 molaren Lösung von n-Dekanol in Hexan mit BF₃ drucklos bei -10°C erhalten wurde und wobei die so hergestellte Komplexlösung mit 50 ml/h dosiert wurde.

Die Ergebnisse sind in Tabelle 1 zusammengestellt.

### Beispiel 4

Analog Beispiel 1 wurden 500 ml/h Isobuten, 400 ml Hexan und 35 ml/h einer Komplexlösung aus BF₃/iso-Nonanol umgesetzt.

Die Ergebnisse sind in Tabelle 1 zusammengestellt.

### Beispiel 5

Die Umsetzung erfolgte analog Beispiel 4, jedoch mit 40 ml/h Komplexlösung.

Die Ergebnisse sind in Tabelle 1 zusammengestellt.

### Beispiel 6

Die Umsetzung erfolgte analog Beispiel 2, jedoch wurde die Komplexlösung bei 20°C 10 Minuten bei 100 mbar behandelt. Die Menge der zudosierten Komplexlösung wurde auf 50 ml/h erhöht.

Die Ergebnisse sind in Tabelle 1 zusammengestellt.

### Beispiel 7

Die Umsetzung erfolgte analog Beispiel 6, jedoch wurde 6 g iso-Tridekanol pro Liter Komplexlösung 24 h vor dem Einsatz zugegeben. Die Dosierrate betrug 150 ml/h.

Die Ergebnisse sind in Tabelle 1 zusammengestellt.

### Vergleichsbeispiel A (gemäß DE-A-27 02 604, Beispiel 1)

In einer kontinuierlich arbeitenden Polymerisationsapparatur wurden pro Stunde 12 kg eines C₄-Schnittes folgender Zusammensetzung
39 % Isobuten
23 % But-1-en
8 % cis-But-2-en
12 % trans-But-2-en
0,01 % Butadien
18 % Butane
mit 8 g/h (= 1,4 mmol/h/mol Isobuten) BF₃ unter kräftigem Rühren und guter Kühlung bei 20°C und 2,3 bar polymerisiert. Die mittlere Verweilzeit betrug 3 Minuten. Danach wurde die Polymerisation mit 3 g Methanol/kg Reaktionsaustrag abgebrochen, wonach die Restgase, das Methanol und die niederen Oligomeren destillativ entfernt wurden.

Die Ergebnisse sind in Tabelle 1 zusammengestellt.

### Vergleichsbeispiel B (gemäß EP-A-145 235, Beispiel 1)

Bei -15°C wird Ethanol, drucklos mit BF₃ gesättigt und mit trockenem Methylenchlorid eine 0,1 molare Lösung hergestellt. Als Feedstock wurde ein C₄-Schnitt gemäß Vergleichsbeispiel A verwendet, der über ein Molsieb 3 Å auf 2 ppm Wassergehalt eingestellt wurde. Polymerisation und Aufarbeitung folgten der Beschreibung.

Die Ergebnisse sind in Tabelle 1 zusammengestellt.

**Tabelle 1**

| | Beispiel | | | | | | | | |
|---|---|---|---|---|---|---|---|---|---|
| | 1 | 2 | 3 | 4 | 5 | 6 | 7 | A | B |
| Katalysatorlösung [ml] | 40 | 35 | 50 | 35 | 40 | 50 | 150 | - | 75 |
| BF₃ Verbrauch [mg/kg Isobuten] | 106 | 791 | 1130 | 791 | 1062 | 791 | 3390 | 4000 | 2074 |
| Umsatz [%] | 95 | 94 | 94 | 95 | 99 | 84 | 79 | 99 | 95 |
| Ausbeute [%] | 99 | 98 | 99 | 98 | 98 | 99 | 86 | 78 | 97 |
| Molekulargewicht M̅_{N} | 2450 | 2300 | 2450 | 2350 | 1950 | 2700 | 950 | 1550 | 1800 |
| Verteilung M̅_{W}/M̅_{N} | 1,9 | 1,8 | 1,9 | 1,8 | 1,8 | 2,0 | 1,4 | 2,5 | 2,0 |
| Anteil endständiger Doppelbindungen [%] | 59 | 62 | 60 | 63 | 52 | 65 | 76 | 62 | 32 |

## Patentansprüche

1. Verfahren zur Herstellung von Polyisobuten aus Isobuten und/oder isobutenhaltigen Kohlenwasserstoffen in Gegenwart eines vorgefertigten Komplexes aus BF₃ und einem Alkohol, dadurch gekennzeichnet, daß man C₉- bis C₂₁-Alkanole als Komplexbildner einsetzt.

2. Verfahren nach Anspruch 1, dadurch gekennzeichnet, daß man die Komplexbildung und/oder die Polymerisation in einem inerten Lösungsmittel durchführt.

3. Verfahren nach Anspruch 1, dadurch gekennzeichnet, daß der Lösungsmittelgehalt des Komplexes 0 bis 99 Gew.-% beträgt.

4. Verfahren nach Anspruch 1, dadurch gekennzeichnet, daß im Komplex ein Molverhältnis von 0,5:1 bis 0,99:1 von BF₃ zu C₉- bis C₂₁-Alkanol vorliegt.

5. Verfahren nach Anspruch 2, dadurch gekennzeichnet, daß man als inerte Lösungsmittel C₅- bis C₂₀-Alkane oder C₅- bis C₈-Cycloalkane einsetzt.

6. Verfahren nach Anspruch 1, dadurch gekennzeichnet, daß das molare Verhältnis von BF₃ zum Komplexbildner von 0,6:1 zu 0,95:1 beträgt.

7. Verfahren nach Anspruch 1, dadurch gekennzeichnet, daß der Isobutenumsatz maximal 95 % beträgt.

## Claims

1. A process for the preparation of polyisobutene from isobutene and/or an isobutene-containing hydrocarbon in the presence of a prepared complex of BF₃ and an alcohol, wherein the complexing agent used is a C₉-C₂₁-alkanol.

2. A process as claimed in claim 1, wherein complexing and/or polymerization is carried out in an inert solvent.

3. A process as claimed in claim 1, wherein the solvent content of the complex is from 0 to 99% by weight.

4. A process as claimed in claim 1, wherein the molar ratio of BF₃ to C₉-C₂₁-alkanol in the complex is from 0.5 : 1 to 0.99 : 1.

5. A process as claimed in claim 2, wherein the inert solvent used is a C₅-C₂₀-alkane or C₅-C₈-cycloalkane.

6. A process as claimed in claim 1, wherein the molar ratio of BF₃ to complexing agent is from 0.6 : 1 to 0.95 : 1.

7. A process as claimed in claim 1, wherein the maximum isobutene conversion is 95%.

## Revendications

1. Procédé de préparation du polyisobutène à partir de l'isobutène et/ou d'hydrocarbures contenant de l'isobutène, en présence d'un complexe apprêté au préalable de BF₃ et d'un alcool, caractérisé en ce que l'on utilise des alcanols en C₉ à C₂₁ à titre d'agents de complexation.

2. Procédé suivant la revendication 1, caractérisé en ce que l'on entreprend la complexation et/ou la polymérisation dans un solvant inerte.

3. Procédé suivant la revendication 1, caractérisé en ce que la teneur en solvant du complexe varie de 0 à 99% en poids.

4. Procédé suivant la revendication 1, caractérisé en ce qu'un rapport molaire de 0,2:1 à 0,99:1 du BF₃ à l'alcanol en C₉ à C₂₁ se présente dans le complexe.

5. Procédé suivant la revendication 2, caractérisé en ce que l'on utilise des alcanes en C₅ à C₂₀ ou des cycloalcanes en C₅ à C₈ à titre de solvants inertes.

6. Procédé suivant la revendication 1, caractérisé en ce que le rapport molaire du BF₃ à l'agent de complexation varie de 0,6:1 à 0,95:1.

7. Procédé suivant la revendication 1, caractérisé en ce que la conversion du butène atteint au maximum 95%.
